# EUROPEAN PATENT SPECIFICATION

(11) **EP 0 338 633 B1**
(45) Date of publication and mention of the grant of the patent: **28.07.1993**
(21) Application number: 89200966.3
(22) Date of filing: 17.04.1989
(51) Int. Cl.: B60R 9/04

(54) **Roof rack for vehicles which can be secured without external stays**
Dachträger für Fahrzeuge zum Befestigen ohne externe Stützen
Galerie de toit pour véhicules à fixation sans supports extérieurs

(30) Priority: 20.04.1988 IT 2026388
(43) Date of publication of application: 25.10.1989
(73) Proprietor: CAM COSTRUZIONE AUTOACCESSORI MILANO S.R.L., Milano (IT)
(72) Inventor: Superti, Alberto, Milano (IT)
(74) Representative: Raimondi, Alfredo, Dott. Ing. Prof.

(56) References cited:
- EP-A- 0 205 414
- DE-A- 3 406 149
- DE-A- 3 626 479
- FR-A- 2 437 324
- US-A- 3 638 844
- US-A- 4 101 061

## Description

This invention relates to a roof rack for vehicles which can be secured without external stays.

When cumbersome loads are carried on motor vehicles and they cannot be placed within the vehicle they must be put on the roof.

Racks attached to the roof of a vehicle, usually consisting of a pair of arched members spaced over the roof of the vehicle on which the loads which are to be carried may be laid and secured are used for this purpose; These racks are commonly described in the industry by the term "roof rack".

A particularly widely used example of this arrangement consists of racks for the carriage of skis, referred to in general as ski racks, but, as is well known, there are also racks for the carriage of small boats, bicycles, bulky luggage and so on.

These supporting frames generally have the problem that they are firmly attached to the vehicle's roof, which supports both the weight of the objects transported and all the aerodynamic forces acting on these as a result of the vehicle's motion.

In vehicles of the "conventional" type there is a small channel acting as a gutter at the sides of the roof within which the supporting ends of the supporting frames can be inserted and secured thereto by clamps and the like.

For aesthetic, aerodynamic and structural reasons vehicles of more recent manufacture frequently do not have such gutters and roof racks must therefore be attached by different means.

In particular there is generally no opportunity for counteracting the outward thrust from the ends of the rack support, due to their rigidity under load, by placing them against a fixed member of the roof of the vehicle, and also the firmness of the attachment between the frame and the roof is usually brought about by friction between the attachment members and the corresponding roof surfaces.

For this purpose known roof racks designed for use on motor vehicles without gutters have stays located close to the roof of the vehicle, or at a short distance from it, and in any event below the portion of the rack comprising the load supporting member, through which the parts providing attachment to the roof, which are suitably shaped in accordance with the shape of the roof itself, can be tightened against the latter.

Owing to the presence of the external stay these designs are however penalised aesthetically and in addition to this the presence of the stays increases the aerodynamic resistance to forward motion provided by the roof rack when mounted on a vehicle.

There is therefore a need to provide a roofrack which does not have visible stays without this nevertheless implying any reduction in the security of the attachment between the roof rack and the roof.

Known roof racks which are designed for use on vehicles without gutters must have attachment members which are shaped to correspond with the vehicle for which they are designed, and this both obliges manufacturers and retailers to supply a very wide range of different shapes of roof racks, or adaptor accessories, and on the other hand compels users to change roof racks or purchase new attachment accessories whenever they change their vehicles.

Examples of such kind of solution are disclosed into FR-2 437 324 that shows a roof rack provided of means to adjust the length of the rack itself, but without possibility of adjusting the horizontal tensioning forces, and also provided of a hook for the coupling with the car roof, the hook is adjustable in vertical direction but it must be designed with a shape corresponding to the roof one.

DE-36 26 479 on which the preamble of claims is based discloses a roof rack with means to adjust horizontal length and tensional forces but again the coupling element for hooking and bearing to the roof is shaped according to the configuration of the car roof thus obliging to change it on changing the car on which mounting the rack.

There is therefore a need to provide a roof rack which will fit many different vehicles without adaptor accessories, although the roofs are of different shape, and may or may not have gutters.

A further requirement is that roof racks should be protected against theft, which may occur if the roof rack is left mounted on the roof of an unattended vehicle. These objects are accomplished by this invention which provides a roof rack for vehicles consisting of an arched frame comprising a central bar of which each end is telescopically inserted into a lateral bar , the outer end of said lateral bars being linked to a member for supporting and attaching the frame to the roof of the vehicle, further comprising a tensionable stay internally joined to the central bar , means for adjusting the relative position of an hook shaped member to the roof of the vehicle , and a swingable chock through which the supporting member rests on the roof , the swingable chock being rotationally connected to the supporting member , in which the central bar has a slight curvature which is upwardly convex giving rise to bowing whose amplitude can be substantially reduced to zero when the stays within the lateral bars are in a state of tensioning following rotation of the supporting members about the corresponding support positions caused by the tensioning itself, and by the fact that said hook-shaped member has a flat portion which can be inserted into corresponding sliding attachment guides in the supporting member and can be adjusted in position through the movement of a screw by sliding between the above mentioned guides so as to come into contact with a corresponding concavity in the edge of the roof of the vehicle, said combination of elements allowing to adapt the roof rack to any type of roof configuration and to effect an independent and differentiate regulation of vertical and horizontal blocking forces.

Appropriately the central bar may have a slight curvature, being convex on the upward side, giving rise to bowing whose amplitude may be reduced substantially to zero when the stays included in the lateral bars are tensioned following rotation of the supporting bodies about the corresponding support positions caused by the tensioning itself.

The hook shaped member has a flat portion inserted in corresponding slide guide attachments in the supporting member, with sliding taking place in a substantially vertical direction, and is provided at its upper end with an internally threaded member into which is inserted a bolt whose bead projects outside the top of the supporting member and bears against it, the position of the hook member being adjusted by sliding the same within the said guides until it comes into contact with a corresponding concavity in the edge of the roof of the vehicle.

Preferably a swingable chock is connected to the supporting member through a pin whose axis of rotation is perpendicular to the axis action of the tightening forces thus assuming the needed inclination requested by the roof cofiguration on regulating the heigth and length of the roof rack.

Means to obstruct access to the means for gripping and turning the stay and adjusting the position of the hook-shaped member which can be attached to the supporting member and removed when not in use are provided for protection against theft, a plate being lodged in a corresponding seat in the supporting member in front of the outer end of the lateral bar, in front of the means for gripping and turning the stay, with a shaped hole within which a rotatable and lockable portion of the fastening for the obstructing members can be engaged, this plate being capable of being removed when not in use.

Further details may be seen from the following description with reference to the appended drawings in which:
Figure 1 shows an overall view of a roof rack according to the invention provided with arms for the secure attachment of skis,
Figure 2 shows a cross-section through a portion of the end of the roof rack, with the fastening and the lateral protective plates separate,
Figure 3 shows the portion in Figure 2 seen from above,
Figure 4 shows a cross section through the plane IV-IV in Figure 2,
Figure 5 shows a view of the end portion of the roof rack without the fastening and protective plate in the direction V in Figure 2,
Figure 6 shows a cross-section through the plane VI-VI in Figure 2,
Figure 7 shows a cross-section through the plane VII-VII in Figure 2,
Figure 8 shows one arm of the secure attachment for skis in longitudinal cross-section.

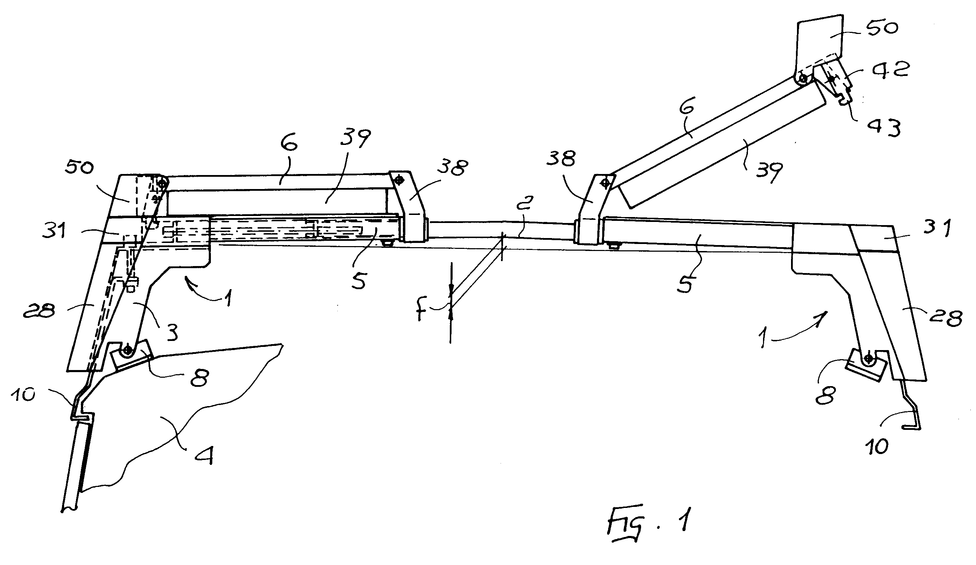

As shown in Figure 1 the roof rack according to the invention consists of an arch structure comprising a pair of lateral members 1 joined by a central bar 2. The lateral members are each provided with a supporting foot 3 through which the lateral members rest on and are attached to the roof 4 of a vehicle, shown in part and diagrammatically in the figure, and a corresponding horizontal bar 5 between which horizontal bars is telescopically inserted central bar 2.

For the carriage of skis the roof rack according to the invention may also be provided with safety attachment arms 6.

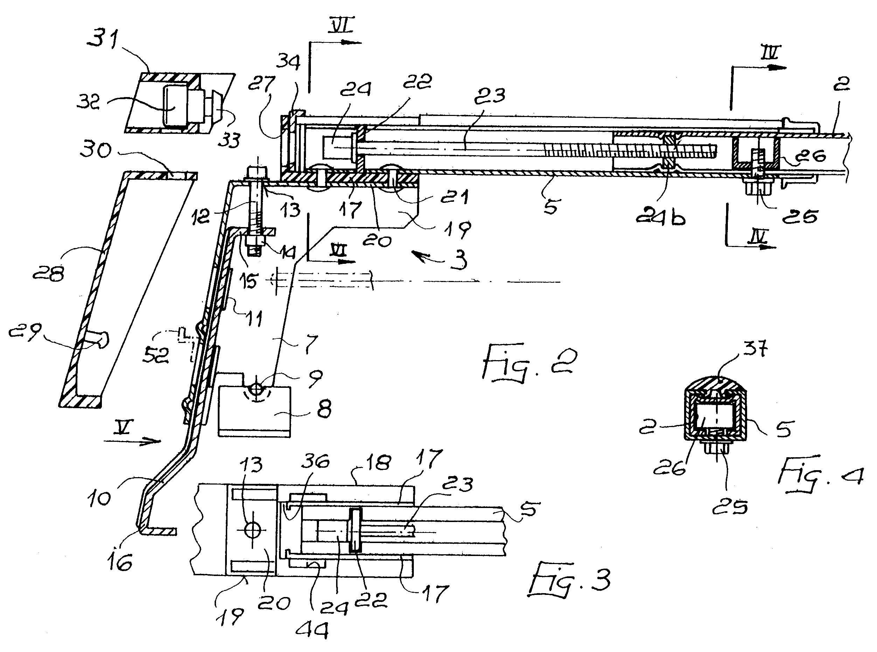

As shown in greater detail in Figure 2, supporting foot 3 comprises a supporting member 7, rigidly attached to horizontal bar 5, which has a chock 8 which can swing about a horizontal pin 9 and can rest upon and take up the inclination of the surface of the roof of the vehicle close to its lateral edge as shown in Figure 1. Member 7 also has a sliding hook 10 consisting of a bending-resistant ribbed metal plate made integral therewith through attachment tongues and guide 11, this hook being capable of being slid in its guides by means of a screw 12 inserted in a hole 13 in the member and engaging the threaded nut 14 attached to the upper end 15 of the said hook.

The lower end 16 of hook 10 is shaped to a profile so as to engage a corresponding attachment surface consisting of recesses, concavities or the like placed on the lateral periphery of roof 4, such as for example the roof gutter, if present, or the window recesses, the door rebate and so on, so as to provide opposition to the upward pull exerted by hook 10.

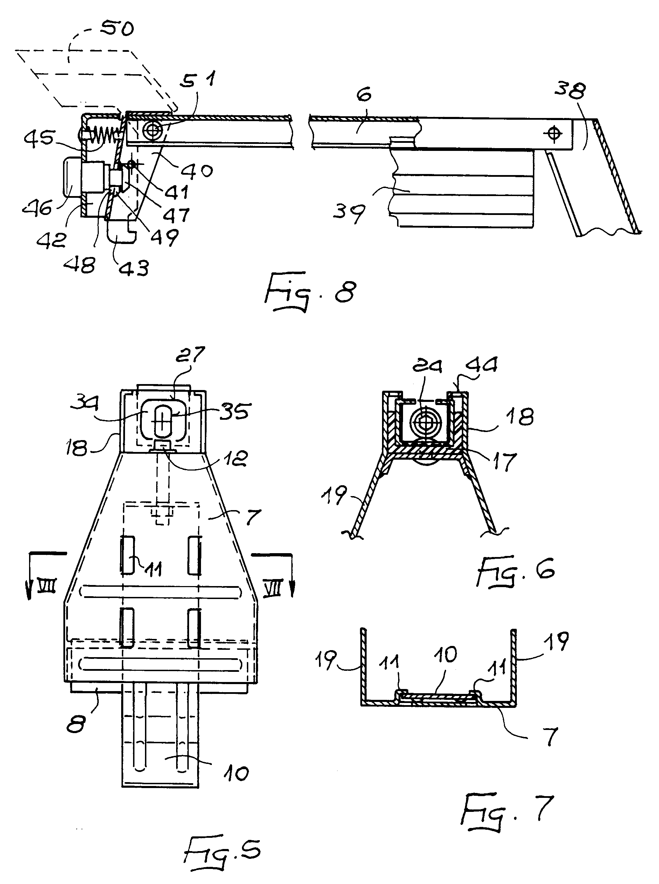

At the top of member 7 there is an internally hollow member 17 of plastics material enclosed by metal side pieces 18, as shown in Figure 6, consisting of extensions of the lateral walls 19 of member 7. Within member 17 is inserted the end of bar 5 which is attached to the upper wall 20 of member 7, by means of rivets 21, forming an attachment which resists bending.
Close to the end of bar 5 inserted in member 17 there is rigidly attached thereto a plate 22 provided with a central hole in which is inserted a threaded stay 23 provided with a head 24 with measn of gripping for the rotation thereof, for example a hexagonal recess, resting against plate 22.

At the other end threaded stay 23 engages the corresponding threaded hole of a plate 24b which is rigidly attached to the end of central bar 2 inserted within lateral bar 5.

As shown in Figure 4, lateral bar 5 has a channel-shaped cross-section with the open side upwards and central bar 2 also has a channel-shaped cross-section with the open side downward. Close to its end opposite foot 3 lateral bar 5 has a hole into which is inserted a screw 25, inserted in a threaded member 26, which can slide but not rotate within median bar 2 so as to permit locking and the prevention of relative slip between bars 2 and 5.

Member 17 has on its side facing the side of the vehicle on which the roof rack is mounted a hole 27 through which access may be gained to the head 24 of stay 23.

Fitting of the roof rack to a vehicle requires the roof rack to be placed on the roof, supporting it on this by means of chocks 8, keeping screw 25 slackened so as to allow bar 2 to slide freely within bar 5.

At this point, with the width of the roof rack adjusted approximately by hand, screws 12 of each of supporting feet 3 are screwed up into corresponding nuts 15 so as to bring the ends 16 of hooks 10 to bear against the corresponding engaging surfaces without further tightening. Then stays 23 are tensioned by adjusting corresponding heads 24, thus tightening the roof rack onto the roof of the vehicle as a result of the central bar sliding between the lateral bars and forcing hooks 10 to engage the corresponding seats in the roof.

When tightened sufficiently to ensure that the roof rack is attached screws 25 may be locked so as to maintain the attachment configuration achieved, regardless of any unlikely slackening in stays 23.

In order to give the whole some degree of elastic yield so as to ensure effective attachment and also to compensate for the tendency for the central bar to sag while it is being tightened, the central bar is itself provided with a slightly upwardly arched shape as illustrated in Figure 1 with a bowing "f" of a few millimetres which is designed to be cancelled out when the stays are subsequently tightened so that the bars are in a straight alignment when in service.

For aesthetic reasons an at least partial cover 28 for member 7 constructed from plastics material is provided and secured to the member itself by a snap-in joint, for example by means of attachment 29 or the like, which can be inserted into corresponding holes or recesses in member 7, which are not shown. Cover 28 is provided with a hole 30 for passage of the head of screw 12 so that the latter can be adjusted.

Also, to provide protection against theft of the roof rack, provision is made for a block 31 of plastics material which is appropriately shaped in accordance with the profile of cover 28 to provide aesthetic continuity therewith, and in this is inserted a fastening 32 with a shaped rotatable end 33. End 33 of the fastening can be inserted into hole 27 and corresponding thereto there is provided a plate 34 with a substantially rectangular shaped hole 35 inserted into grooves 36 of member 17.

End 33 of the fastening which is shaped to correspond to hole 27 can be inserted into hole 27 in one position only, and subsequent rotation of end 33 prevents removal of block 31, which in turn makes it impossible to gain access to stay 23 and screw 12.

A packing 37 of rubber or the like is inserted into and retained in the corresponding upward facing opening of the channel-shaped metal section forming lateral bars 5, as can be seen in Figure 4, in order to provide a support for the objects being carried thereon.

For the carriage of skis and to provide protection against theft of the latter the roof rack according to the invention may be fitted with arms 6, freely articulated on corresponding supports 38, which are attached to the ends of lateral bars 5 opposite the corresponding supporting feet and are provided with an elastic packing 39 which presses the skis against bar 5. At its free end each arm 6 has a support 40 which is enclosed on three sides, as shown in Figure 8, rigidly attached to the arm itself and provided with a transverse pin 41 on which a shaped cover 42 provided beneath with a pair of hooks 43 is swingably mounted.

Corresponding to these hooks 43 the sides 18 of member 7 have reentrants 44, shown in Figures 3 and 6, below which member 17 has corresponding recesses thus forming openings into which hooks 43 can be inserted, bearing against the corresponding edge when cover 42 is rotated through the action of a spring 45 which is placed between support 40 and cover 42 opposite hooks 43 with respect to pin 41. Cover 42 also has a fastening 46 with a movable end 47 which can be inserted into an elongated hole 48 and can engage the fins 49 of the lateral edges of the said hole, thus immobilising swingable cover 42 with hooks 43 engaging the edges of reentrants 43 thus ensuring that arm 6 is safely secured against theft and accidental opening.

Above cover 42 there is also provided a cap 50 of plastics material, shown by dashed lines in Figure 8, which can rotate about a corresponding pin 51 and protects fastening 46, also ensuring aesthetic continuity with block 31.

A channel portion 52 having a profile similar to that of conventional gutters on vehicles, shown by a dotted and dashed line in Figure 2, may be provided on member 7 and to this can be hooked a conventional supporting device for special objects such as skis, bicycles, boats and so on, which can no longer be fitted to a vehicle which does not have a gutter but which can nevertheless be reused without further modifications on the roof rack according to the invention which is suitable for mounting on such vehicls.

The roof rack according to the invention can therefore be fitted to vehicle having a roof of any profile with or without gutters, and be firmly attached thereto with lateral fastening to the roof itself without any unsightly external stay which causes increased aerodynamic resistance.

However in particularly heavy duty applications such as the transport of large loads a stay which is shown partly by a dashed and dotted line in Figure 2 may be provided in any case and attached to members 7 at the two ends of the roof rack.

Many variants may be introduced without thereby going beyond the scope of the general characteristics of the invention.

## Claims

1. A roof rack for vehicles consisting of an arched frame comprising a central bar (2) of which each end is telescopically inserted into a lateral bar (5), the outer end of said lateral bars (5) being linked to a member (7) for supporting and attaching the frame to the roof (4) of the vehicle, further comprising a tensionable stay (23) internally joined to the central bar (2), means (18,13,15) for adjusting the relative position of an hook shaped member (10) to the roof (4) of the vehicle (-), and a swingable chock (8) through which the supporting member (7) rests on the roof (4), the swingable chock (8) being rotationally connected to the supporting member (7), characterised in that the central bar (2) has a slight curvature which is upwardly convex giving rise to bowing whose amplitude can be substantially reduced to zero when the stays (23) within the lateral bars (5) are in a state of tensioning following rotation of the supporting members (7) about the corresponding support positions caused by the tensioning itself, and by the fact that said hook-shaped member (10) has a flat portion which can be inserted into corresponding sliding attachment guides (11) in the supporting member (7) and can be adjusted in position through the movement of a screw (12) by sliding between the above mentioned guides (11) so as to come into contact with a corresponding concavity in the edge of the roof (4) of the vehicle, said combination of elements allowing to adapt the roof rack to any type of roof configuration and to effect an independent and differentiate regulation of vertical and horizontal blocking forces.

2. A roof rack for vehicles in accordance with claim 1, characterised in that the median bar (2) has a slight curvature which is upwardly convex giving rise to bowing whose amplitude (f) can be substantially reduced to zero when the stays (23) within the lateral bars (5) are in a state of tension following rotation of the supporting members (7) about the corresponding support positions caused by the tensioning itself.

3. A roof rack for vehicles according to claim 1, characterised in that said hook-shaped member (10) has a flat portion which can be inserted into corresponding sliding attachment guides (11) in the supporting member, the sliding taking place a substantially vertical direction, and is provided at its upper end with an internally threaded member (15) into which is inserted a screw (12) whose head (13) projects beyond the top of the supporting member and bears thereagainst, through the movement of which the hook member (10) can be adjusted in position by sliding between the abovementioned guides (11) so as to come into contact with a corresponding concavity in the edge of the roof of the vehicle.

4. A roof rack for vehicles in accordance with claim 1, characterised in that said swingable chock (8) is connected to the supporting member (7) through a pin (9) whose axis of rotation is perpendicular to the axis action of the tightening forces thus assuming the needed inclination requested by the roof (4) configuration on regulating the heigth and length of the roof rack.

5. A roof rack for vehicles according to claims 2, 3, characterised in that mean (31,33) provided for obstructing access to the means (24) for gripping and turning the stay (23) and adjusting the position of the hook-shaped member (10), which can be attached to the supporting member (7) by means of a fastening (33) and can be removed when not in use, there being a plate (34) housed in a corresponding seat in the supporting member (7) facing the outer end of the lateral bar (5) in front of the means (24) for gripping and turning the stay (23) which has a shaped hole (27) within which a rotatable and lockable portion of the fastening (33) for the means of obstruction can be engaged, this this plate (34) being capable of being removed when not in use.

## Patentansprüche

1. Dachträger für Fahrzeuge, bestehend aus einem gekrümmten Rahmen mit einer mittleren Stange (2), deren jedes Ende teleskopartig in eine seitliche Stange (5) eingeführt ist, wobei das äußere Ende der seitlichen Stangen (5) an ein Element (7) zum Tragen und Befestigen des Rahmens mit dem Dach (4) des Fahrzeuges angelenkt ist, ferner aufweisend: eine spannbare Stütze (23), welche mit der mittleren Stange (2) im Inneren verbunden ist, Mittel (18, 13, 15) zum Einstellen der Stellung eines hakenförmigen Elementes (10) relativ zu dem Dach (4) des Fahrzeuges (-), sowie einen verschwenkbaren Block (8), durch welchen das Trägerelement (7) auf dem Dach (4) ruht, wobei der verschwenkbare Block (8) in drehbarer Weise mit dem Trägerelement (7) verbunden ist, **dadurch gekennzeichnet**, daß die mittlere Stange (2) eine leichte Krümmung aufweist, welche nach oben konvex ist und zu einer Biegung führt, deren Weite im wesentlichen auf Null reduziert werden kann, wenn die Stützen (23) innerhalb der seitlichen Stangen (5) sich in einem Zustand der Spannung befinden, welcher einer durch das Spannen selbst verursachten Drehung der Trägerelemente (7) um die entsprechenden Abstützpositionen folgt, ferner **gekennzeichnet durch** die Tatsache, daß das hakenförmige Element (10) einen ebenen Abschnitt besitzt, welcher in entsprechende Gleitbefestigungsführungen (11) in dem Trägerelement (7) eingesetzt werden kann und durch die Bewegung einer Schraube (12) durch Gleiten zwischen den oben genannten Führungen (11) hinsichtlich der Position einjustiert werden kann, um in Berührung mit einer entsprechenden Konkavität in der Kante des Daches (4) des Fahrzeuges zu gelangen, wobei die Kombination dieser Elemente die Anpassung des Dachträgers an irgendeine Art von Dachausgestaltung sowie die Bewirkung einer unabhängigen und differenzierten Einstellung der vertikalen und horizontalen Blockierungskräfte erlaubt.

2. Dachträger für Fahrzeuge gemäß Anspruch 1, **dadurch gekennzeichnet**, daß die mittlere Stange (2) eine leichte Krümmung aufweist, welche nach oben konvex ist und eine Biegung bewirkt, deren Weite (f) im wesentlichen bis zu Null reduziert werden kann, wenn die Stützen (23) innerhalb der seitlichen Stangen (5) sich in einem Zustand der Spannung befinden, welcher einer durch das Spannen selbst verursachten Drehung der Trägerelemente (7) um die entsprechenden Abstützpositionen folgt.

3. Dachträger für Fahrzeuge gemäß Anspruch 1, **dadurch gekennzeichnet**, daß das genannte hakenförmige Element (10) einen ebenen Abschnitt aufweist, welcher in entsprechende Gleitbefestigungsführungen (11) in dem Trägerelement eingesetzt werden kann, wobei dieses Gleiten im wesentlichen in einer vertikalen Richtung stattfindet, und daß das hakenförmige Element (10) an seinem oberen Ende mit einem mit Innengewinde versehenen Glied (15) versehen ist, in welches eine Schraube (12) eingeführt ist, deren Kopf (13) über die Oberseite des Trägerelementes hinaus vorspringt und sich dagegen abstützt, wobei durch die Bewegung der Schraube (12) das Haken-Element (10) durch Gleiten zwischen den oben erwähnten Führungen (11) in seiner Position einjustiert werden kann, so daß es in Berührung mit einer entsprechenden Konkavität in der Kante des Daches des Fahrzeuges gelangt.

4. Dachträger für Fahrzeuge gemäß Anspruch 1, **dadurch gekennzeichnet**, daß der verschwenkbare Block (8) mit dem Trägerelement (7) durch einen Stift (9) verbunden ist, dessen Drehachse senkrecht zu der Wirkachse von Spann- oder Festspannkräften gerichtet ist, um hierdurch die notwendige Neigung anzunehmen, welche durch die Ausgestaltung des Daches (4) bei der Einstellung von Höhe und Länge des Dachträgers gefordert wird.

5. Dachträger für Fahrzeuge nach den Anansprüchen 2, 3, **dadurch gekennzeichnet**, daß Mittel (31, 33) zum Versperren des Zuganges zu den Mitteln (24) zum Ergreifen und Drehen der Stütze (23) und zum Einstellen der Position des hakenförmigen Elementes (10) vorgesehen sind, welches mit dem Trägerelement (7) mit Hilfe eines Befestigungselementes (33) befestigt und im Falle der Nichtbenutzung entfernt werden kann, wobei eine in einer entsprechenden Aufnahme in dem Trägerelement (7) untergebrachte Platte (34) als Verkleidung des äußeren Endes der seitlichen Stange (5) im Bereich der Stirnseite der Mittel (24) zum Ergreifen und Drehen der Stütze (23) vorgesehen ist, welche Platte (34) eine geformte Öffnung (27) aufweist, innerhalb welcher ein drehbarer und verriegelbarer Abschnitt des Befestigungselementes (33) für die Mittel zum Versperren zum Eingriff gebracht werden kann, und wobei ferner diese Platte (34) dazu befähigt ist, im Falle der Nichtbenutzung abgenommen zu werden.

## Revendications

1. Une galerie de toit pour véhicules comprenant une armature cintrée comportant une barre centrale (2) dont chaque extrémité est insérée de manière télescopique dans une barre latérale (5), l'extrémité extérieure desdites barres latérales (5) étant reliée à un organe (7) pour le support et la fixation de l'armature au toit (4) du véhicule, comprenant en outre un tirant de traction (23) relié intérieurement à la barre centrale (2), des moyens (18, 13, 15) pour régler la position relative d'un organe (10) en forme de crochet par rapport au toit (4) du véhicule (-) et une cale pivotante (8) par l'intermédiaire de laquelle l'organe de support (7) repose sur le toit (4), la cale pivotante (8) étant articulée à l'organe de support (7), caractérisée en ce que la barre centrale (2) présente une légère courbure qui est convexe vers le haut en formant une partie arquée dont l'amplitude peut être sensiblement réduite à zéro lorsque les tirants (23) à l'intérieur des barres latérales (5) sont dans un état de tension à la suite de la rotation des organes de support (7) autour des positions de support correspondantes provoquées par la mise en tension elle-même, et par le fait que ledit organe (10) en forme de crochet présente une partie plane qui peut être insérée dans des guides coulissants (11) de fixation correspondants prévus dans l'organe de support (7) et peut être réglée en position par l'intermédiaire du mouvement d'une vis (12) par coulissement entre les guides (11) mentionnés ci-dessus afin de venir en contact avec une concavité correspondante du bord du toit (4) du véhicule, ladite combinaison d'éléments permettant d'adapter la galerie de toit à tout type de forme de toit et à effectuer un réglage indépendant et différencié des forces de blocage horizontales et verticales.

2. Une galerie de toit pour véhicules selon la revendication 1, caractérisée en ce que la barre médiane (2) présente une légère courbure qui est convexe vers le haut en formant une partie arquée dont l'amplitude (f) peut être sensiblement réduite à zéro lorsque les tirants (23) à l'intérieur des barres latérales (5) sont dans un état de tension à la suite de la rotation des organes de support (7) autour des positions de support correspondantes provoquées par la mise en tension elle-même.

3. Une galerie de toit pour véhicules selon la revendication 1, caractérisée en ce que ledit organe (10) en forme de crochet présente une partie plane qui peut être insérée dans des guides coulissants (11) de fixation correspondants prévus dans l'organe de support, le coulissement se produisant dans une direction sensiblement verticale, et présente à son extrémité supérieure un organe fileté intérieurement (15) dans lequel est insérée une vis (12) dont la tête (13) fait saillie au-delà de la partie supérieure de l'organe de support et prend appui contre elle, par l'intermédiaire du mouvement de laquelle l'organe (10) en forme de crochet peut être réglé en position par coulissement entre les guides (11) mentionnés ci-dessus de manière à venir en contact avec une concavité correspondante du bord du toit du véhicule.

4. Une galerie de toit pour véhicules selon la revendication 1, caractérisée en ce que la cale pivotante (8) est reliée à l'organe de support (7) par l'intermédiaire d'une tige (9) dont l'axe de rotation est perpendiculaire à l'axe d'action des forces de serrage en prenant ainsi l'inclinaison nécessaire exigée par la configuration du toit (4) sur le réglage de la hauteur et de la longueur du toit du véhicule.

5. Une galerie de toit pour véhicules selon les revendications 2, 3, caractérisée en ce que des moyens (31, 33) sont prévus pour empêcher l'accès aux moyens (24) pour saisir et faire tourner le tirant (23) et régler la position de l'organe (10) en forme de crochet, lesquels peuvent être fixés à l'organe de support (7) au moyen d'une attache (33) et peuvent être retirés lorsqu'ils ne sont pas utilisés, une plaque (34) étant placée dans un siège correspondant de l'organe de support (7) faisant face à l'extrémité extérieure de la barre latérale (5) en face des moyens (24) pour saisir et faire tourner le tirant (23) qui présente un trou conformé (27) à l'intérieur duquel peut être engagée une partie rotative et verrouillable de l'attache (33) pour les moyens d'empêchement, cette plaque (34) pouvant être retirée lorsqu'elle n'est pas utilisée.
